# EUROPÄISCHE PATENTSCHRIFT

(11) **EP 1 858 786 B1**
(45) Veröffentlichungstag und Bekanntmachung des Hinweises auf die Patenterteilung: **23.11.2011**
(21) Anmeldenummer: 06723363.5
(22) Anmeldetag: 10.03.2006
(51) Int. Cl.: B65G 47/64

(54) **FÖRDEREINRICHTUNG**
CONVEYING DEVICE
SYSTEME DE TRANSPORT

(30) Priorität: 12.03.2005 DE 102005011466
(43) Veröffentlichungstag der Anmeldung: 28.11.2007
(73) Patentinhaber: Smiths Heimann GmbH, 65205 Wiesbaden (DE)
(72) Erfinder: AUST, Stefan, 65510 Idstein (DE); SCHÖPE, Hans-Joachim, 65232 Taunusstein (DE)
(74) Vertreter: Dietrich, Barbara
(86) Internationale Anmeldenummer: PCT/EP2006/002251
(87) Internationale Veröffentlichungsnummer: WO 2006/097253

(56) Entgegenhaltungen:
- EP-A- 0 909 724
- EP-A- 1 298 055
- DE-A1- 3 806 036
- US-A1- 2003 168 313
- US-B1- 6 394 257
- PATENT ABSTRACTS OF JAPAN Bd. 012, Nr. 121 (M-686), 15. April 1988 (1988-04-15) & JP 62 249818 A (ISHIKAWAJIMA HARIMA HEAVY IND CO LTD), 30. Oktober 1987 (1987-10-30)

## Beschreibung

Die vorliegende Erfindung betrifft eine Vorrichtung zur Sicherheitsüberprüfung von Gepäck- oder Frachtstücken, gemäß dem Oberbegriff des Anspruchs 1, wie sie aus der EP-A-1 298 055 bekannt ist.

Im Rahmen der Sicherheitsüberprüfung von Gepäck- oder Frachtstücken ist es häufig notwendig, einzelne Objekte aus dem Gesamtstrom aus- und wieder einzuschleusen, beispielsweise um sie einer besonderen Prüfung zu unterziehen. Oftmals muss auch der Objektfluss in zwei oder mehr Teilflüsse aufgeteilt werden, zum Beispiel wenn bestimmte Glieder der Prüfkette einen zu geringen Durchsatz aufweisen und so an dieser Stelle eine Parallelisierung des Objektflusses gewünscht ist. Zu diesem Zweck sind Weichen bekannt, die üblicherweise in Form eines horizontalen Y gestaltet sind und eine Aufteilung beziehungsweise Sortierung des Objektflusses erlauben. Der Nachteil derartiger Weichen ist jedoch, dass sie eine vergleichsweise große Grundfläche benötigen und daher bei begrenzten Platzverhältnissen nur beschränkt einsetzbar sind.

Es ist daher die Aufgabe der vorliegenden Erfindung, eine Fördereinrichtung bereit zu stellen, die bei geringer Grundfläche ein Aus- und / oder Einschleusen einzelner Objekte beziehungsweise die Aufteilung und / oder Zusammenführung eines Objektflusses ermöglicht.

Gelöst wird diese Aufgabe erfindungsgemäß durch eine Vorrichtung zur Sicherheitsüberprüfung von Gepäck-oder Frachtstücken gemäß Anspruch 1.

Das Grundprinzip ist die vertikale Separierung der Objekte. Dabei kann Separierung in diesem Dokument die Aufteilung oder Zusammenführung eines Objektflusses ebenso bezeichnen wie das Aus- oder Einschleusen von einzelnen Objekten. Dies erfolgt über sogenannte Gepäckweichen, die im Wesentlichen aus einem Lift mit in festem Abstand parallel übereinander angeordneten Horizontalfördermitteln bestehen. Objekte werden der Gepäckweiche durch ein Fördermittel zugeführt und können auf andere Niveaus angehoben oder abgesenkt werden. Dabei ist die relative Position der Horizontalfördermittel zueinander unveränderlich, das Verfahren zwischen den verschiedenen Positionen betrifft also immer die gesamte Anordnung der Horizontalfördermittel gleichzeitig. Die Horizontalfördermittel an sich können jedoch unabhängig voneinander betrieben werden. Dies bezieht sich sowohl auf die Transportrichtung als auch darauf, ob ein Horizontalfördermittel stillsteht oder einen Transportvorgang durchführt. Insbesondere kann es sich bei den Horizontalfördermitteln um Förderbänder oder Rollenförderer handeln.

Die Objekte werden der Gepäckweiche über eine Hauptförderstrecke zugeführt, die üblicherweise hinter der Gepäckweiche in gleicher Höhe weitergeführt wird. Die vertikale Gepäckweiche hebt nun Objekte auf eine andere Ebene an oder senkt Objekte auf eine andere Ebene ab. Auf diesen Ebenen kann das Objekt direkt manuell von der Gepäckweiche entnommen werden oder mittels eines Anschlussfördermittels beziehungsweise einer Nebenförderstrecke weitertransportiert werden.

In einer besonderen Ausgestaltungsform weist die Fördereinrichtung zwei Gepäckweichen auf. Dabei sind in vorteilhafter Weise Fördermittel zwischen den Gepäckweichen an mindestens einer erreichbaren Position angeordnet. Somit lässt sich der Objektfluss an der ersten Gepäckweiche parallelisieren und an der zweiten Gepäck wieder zusammenführen.

Der Objektfluss beziehungsweise der Zustand der Fördereinrichtung kann mittels Sensoren wie zum Beispiel Lichtschranken überwacht werden. Der Gesamtablauf kann beispielsweise durch eine SPS gesteuert werden. Durch Einbeziehung der Prüfvorrichtungen wie Röntgenprüfanlagen kann die gesamte Sicherheitsüberprüfung automatisiert werden.

Die vorliegende Erfindung wird anhand zweier Ausführungsbeispiele näher erläutert. Dabei zeigt:
Figur 1 eine Fördereinrichtung mit einer Gepäckweiche und
Figur 2 eine Fördereinrichtung mit zwei Gepäckweichen.

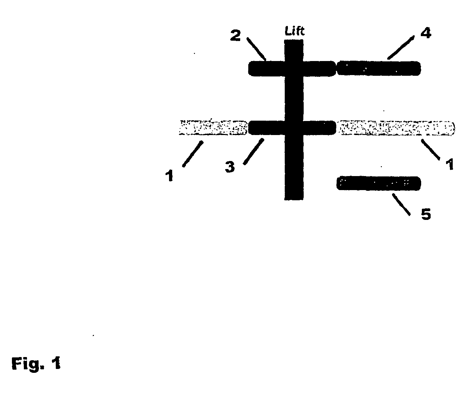

Figur 1 zeigt eine Fördereinrichtung in einer Vorrichtung zur Sicherheitsüberprüfung von Gepäck- oder Frachtstücken mit einer Gepäckweiche aus zwei in festem Abstand parallel übereinander angeordneten, vertikal mit Hilfe eines Lifts verfahrbaren Horizontalfördermitteln 2 und 3. Bevorzugt handelt es sich bei den Horizontalfördermitteln 2 und 3 um Förderbänder. Alternativ können auch andere Fördermittel wie beispielsweise Kugelmatten oder Rollenförderer verwendet werden. Im vorliegenden Beispiel werden die Objekte über eine Zuförderstrecke der Gepäckweiche zugeführt und über eine Abförderstrecke abtransportiert. Zu- und Abförderstrecke bilden gemeinsam die Hauptförderstrecke 1.

In der in Figur 1 dargestellten Stellung der Gepäckweiche wird die Hauptförderstrecke 1 durch das Förderband 3 geschlossen, so dass ein ungehinderter Objektfluss stattfinden kann. Soll ein Objekt ausgeschleust werden, so wird es auf dem Förderband 3 angehalten und die Gepäckweiche in eine andere, untere Stellung verfahren. In dieser kann das Objekt vom Förderband 3 auf das Förderband 5 bewegt werden, während Förderband 2 nun die Hauptförderstrecke 1 schließt. Ein weiteres Objekt kann ausgeschleust werden, indem es auf Förderband 2 angehalten und die Gepäckweiche wieder in die in Figur 1 dargestellte Stellung verfahren wird. Das zweite Objekt kann nun von Förderband 2 auf das Förderband 4 bewegt werden. Die Objekte können wieder in die Hauptförderstrecke 1 eingeschleust werden, indem die Förderrichtung der Förderbänder 2 und 4 bzw. 3 und 5 umgekehrt und die Gepäckweiche entsprechend verfahren wird. Dies geschieht mittels einer motorischen Verfahreinheit zur Positionierung des Lifts. Als motorische Verfahreinheit eignen sich insbesondere elektrische und hydraulische Antriebe. Als Lift wird vorzugsweise ein Cantilever Lift verwendet.

Im Bereich der Förderbänder 4 und 5 kann entweder eine manuelle Entnahme der Objekte erfolgen oder eine automatische Analyse mit Hilfe einer Prüfvorrichtung. Weiterhin ist es möglich, dass mittels der Gepäckweiche nicht einzelne Objekte aus- und wieder eingeschleust werden, sondern die Objekte alternativ auf die Bänder 4 bzw. 5 verteilt, dort untersucht und wieder auf die Hauptförderstrecke 1 gebracht werden. Durch diese Parallelisierung der Untersuchung kann der Durchsatz des Systems beträchtlich erhöht werden.

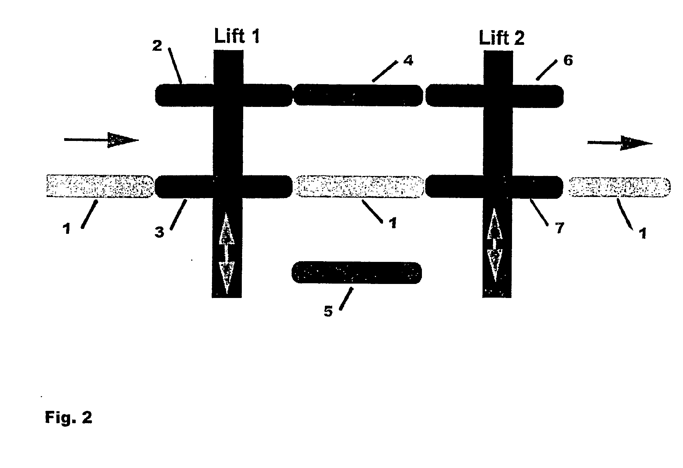

Figur 2 zeigt eine Fördereinrichtung mit zwei Gepäckweichen. Der prinzipielle Aufbau entspricht dem aus Figur 1, mit dem Unterschied, dass die Hauptförderstrecke 1 durch eine zweite Gepäckweiche unterbrochen wird. Dabei sind zwischen den beiden Gepäckweichen Zwischenfördermittel angeordnet. Diese sind im vorliegenden Beispiel als Förderbänder 6 und 7 ausgestaltet und so angeordnet, dass sie je nach Stellung der Gepäckweiche an die Förderbänder 4 oder 5 bzw. den mittleren Teil der Hauptförderstrecke 1 zwischen den Gepäckweichen anschließen. Dazu entspricht der vertikale Abstand der Zwischenfördermittel bevorzugt dem Abstand der Horizontalfördermittel der Gepäckweichen.

Die Verteilung der Objekte auf die Förderbänder 4 und 5 sowie den mittleren Abschnitt der Hauptförderstrecke 1 erfolgt wie im ersten Beispiel anhand Figur 1 beschrieben. Der Rücktransport der Objekte von den Förderbändern 4 und 5 auf die Hauptförderstrecke 1 geschieht jedoch nicht durch Umkehrung der Förderrichtung, sondern mittels der zweiten Gepäckweiche. Auch in dieser Ausführungsform bestehen im Bereich der Förderbänder 4 und 5 bzw. des mittleren Bereichs der Hauptförderstrecke 1 die gleichen Möglichkeiten zur manuellen Entnahme von Objekten oder zur automatischen Analyse wie im ersten Beispiel. Der Vorteil dieses Systems aus zwei Gepäckweichen liegt darin, dass erstens die Förderrichtung nicht umgekehrt werden muss und zweitens die Verteilung der Objekte flexibler gestaltet werden kann, beispielsweise wenn die Untersuchung eines Objektes eine überdurchschnittlich lange Zeit in Anspruch nimmt. Es sei noch ausdrücklich darauf hingewiesen, dass nicht notwendiger Weise an allen erreichbaren Positionen zwischen den Gepäckweichen Anschlussfördermittel vorhanden sein müssen.

Die vorstehend genannten Ausführungsbeispiele sind rein exemplarisch und insofern nicht beschränkend. Insbesondere können die Art der Fördermittel sowie ihre Anzahl variieren. Auch kann die Fördereinrichtung mehr als zwei Gepäckweichen aufweisen beispielsweise um mehrere Analysestufen zu realisieren.

## Patentansprüche

1. Vorrichtung zur Sicherheitsüberprüfung von Gepäck- oder Frachtstücken, mit einer Hauptförderstrecke (1) und mindestens einer Gepäckweiche **dadurch gekennzeichnet, dass** die Gepäckweiche mindestens zwei mit festern Abstand parallel übereinander angeordnete, vertikal mit Hilfe eines Lifts verfahrbare Horizontalfördermittel (2, 3) aufweist, und dass die Hauptförderstrecke (1) hinter der Gepäckwelche in gleicher Höhe weitergeführt wird.

2. Vorrichtung nach Anspruch 1, **dadurch gekennzeichnet, dass** es sich bei dem Horizontalfördermittel (2, 3) um ein Förderband handelt.

3. Vorrichtung nach Anspruch 1 oder 2, **gekennzeichnet durch** eine motorische Verfahreinheit zur Positionierung des Lifts.

4. Vorrichtung nach einem der Ansprüche 1 bis 3, **gekennzeichnet durch** mindestens ein Zwischenfördermittel (6, 7) zwischen jeweils zwei Gepäckweichen.

## Claims

1. Arrangement for the security checking of items of luggage or freight, having a main conveying section (1) and at least one luggage diverter, **characterized in that** the luggage diverter has at least two horizontal conveying means (2, 3), which are arranged in a manner parallel to one another at a fixed spacing one above the other and can be displaced vertically with the aid of a lift, and **in that** the main conveying section (1) is continued at the same height behind the luggage diverter.

2. Arrangement according to Claim 1, **characterized in that** the horizontal conveying means (2, 3) is a conveying belt.

3. Arrangement according to Claim 1 or 2, **characterized by** a motor-driven displacement unit for positioning the lift.

4. Arrangement according to one of Claims 1 to 3, **characterized by** at least one intermediate conveying means (6, 7) between in each case two luggage diverters.

## Revendications

1. Dispositif de contrôle de sécurité de bagages ou de colis, comprenant une voie de transport principale (1) et au moins un aiguillage pour bagages, **caractérisé en ce que** l'aiguillage pour bagages présente au moins deux moyens de transport horizontaux (2, 3) disposés parallèlement l'un au-dessus de l'autre à distance fixe, déplaçables verticalement à l'aide d'un dispositif de levage, et **en ce que** la voie de transport principale (1) se poursuit à la même hauteur derrière l'aiguillage pour bagages.

2. Dispositif selon la revendication 1, **caractérisé en ce que** le moyen de transport horizontal (2, 3) est une bande transporteuse.

3. Dispositif selon la revendication 1 ou 2, **caractérisé par** une unité de déplacement motorisée pour le positionnement du dispositif de levage.

4. Dispositif selon l'une quelconque des revendications 1 à 3, **caractérisé par** au moins un moyen de transport intermédiaire (6, 7) entre deux aiguillages pour bagages respectifs.
